# EUROPEAN PATENT APPLICATION

(11) **EP 4 005 527 A1**
(43) Date of publication of application: **01.06.2022**
(21) Application number: 20847074.0
(22) Date of filing: 18.03.2020
(51) Int. Cl.: A61C 7/08

(54) **ORTHODONTIC TOOL**

(30) Priority: 31.07.2019 JP 2019141471
(71) Applicant: Sheepmedical Co., Ltd., Tokyo 104-0032 (JP)
(72) Inventor: ISHIGAME, Masaru, Tokyo 104-0032 (JP)
(74) Representative: Klunker IP Patentanwälte PartG mbB
(86) International application number: PCT/JP2020/011918
(87) International publication number: WO 2021/019832

(57) **Abstract**

[Problem]

To provide an orthodontic appliance capable of correcting a dentition while spreading the dentition in the lateral direction, and adjusting a muscle function around an oral cavity.

[Solution]

A inner peripheral wall (20) of an orthodontic appliance (10) includes an upper wall (21) and a lower wall (22), the upper wall (21) and the lower wall (22) include upper side surface portions (21a) and lower side surface portions (22a) approaching a base portion (11), respectively, each of the upper side surface portions (21a) has an upper inclined surface (25) capable of being in contact with an upper dentition, and each of the lower side surface portions (22a) has a lower inclined surface (26) capable of being in contact with a lower dentition.

## Description

### FIELD

The present invention relates to an orthodontic appliance to be used, for example, for a child whose deciduous dentition is being replaced with a permanent dentition.

### BACKGROUND

Traditionally, examples of an appliance for correcting a dentition include a mouthpiece to be attached to the dentition. Such a mouthpiece is formed in a shape covering the entire upper teeth or the entire lower teeth. That is, the mouthpiece has an open frame structure so that when inserted into an oral cavity and attached to a corresponding dental arch of a user, a tooth engaging member imparts an orthodontic force to the arch (e.g., see Patent Document 1).

### LIST OF DOCUMENTS

### [Patent Documents]

Patent Document 1: Japanese Patent No. 5705794

### SUMMARY

### [Technical Problem]

However, in the conventional mouthpiece described in Patent Document 1, although a dentition of front teeth can be corrected without requiring a relatively long period of time, there is a problem that a long period of time is required to correct a dentition of back teeth because the force for spreading the dentition in the lateral direction is weak.

In addition, if the dentition is in a crowded state, the tongue and muscles around the oral cavity may not be positioned in a harmonious position. Such disharmony of the muscles around the oral cavity may be a cause of malocclusion.

In view of such problems, it is an object of the present invention to provide an orthodontic appliance capable of correcting a dentition while spreading the dentition in the lateral direction, and adjusting a muscle function around an oral cavity.

### [Solution to Problem]

To solve such problems, the present invention provides an orthodontic appliance including a base portion configured to be sandwiched between an upper dentition of an upper jaw and a lower dentition of a lower jaw and formed in a U-shape in plan view, an outer peripheral wall arranged on an outer peripheral edge side of the base portion and protruding in an up-down direction, and an inner peripheral wall arranged on an inner peripheral edge side of the base portion and protruding in the up-down direction. Here, the inner peripheral wall includes an upper wall arranged above the base portion and a lower wall arranged below the base portion. The upper wall and the lower wall include upper side surface portions and lower side surface portions approaching the base portion, respectively. Each of the upper side surface portions includes an upper inclined surface formed to be capable of being in contact with the upper dentition and having a distance with respect to the outer peripheral wall becoming narrower from an upper side toward a lower side. Each of the lower side surface portions includes a lower inclined surface formed to be capable of being in contact with the lower dentition having a distance with respect to the outer peripheral wall becoming narrower from a lower side toward an upper side.

Further, in the present invention, the inner peripheral wall may be formed more angularly than the U-shape in plan view.

Further, in the present invention, the angular corner parts of the inner peripheral wall may be formed at positions corresponding to positions between a canine and a premolar on both the right and left sides, respectively.

Further, in the present invention, a distance between the upper inclined surfaces at the right and left lowermost parts and a distance between the lower inclined surfaces at the uppermost parts, corresponding to right and left first molars, may be set to 36 mm to 41 mm.

Further, in the present invention, the base portion, the outer peripheral wall, and the inner peripheral wall may be integrally formed of an elastic resin material.

Further, the orthodontic appliance of the present invention may be attached to the upper dentition of the upper jaw and the lower dentition of the lower jaw when a deciduous dentition is being replaced with a permanent dentition.

### [Effect of the Invention]

According to the present invention, the inner peripheral wall includes the upper wall and the lower wall, the upper wall and the lower wall include the upper side surface portions and the lower side surface portions approaching the base portion, respectively, each of the upper side surface portions has the upper inclined surface capable of being in contact with the upper dentition, and each of the lower side surface portions has the lower inclined surface capable of being in contact with the lower dentition. Accordingly, for example, when a deciduous dentition is being replaced with a permanent dentition, owing to that the upper dentition is brought into contact with the upper inclined surface and the lower dentition is brought into contact with the lower inclined surface, the dentition can be corrected while being spread in the lateral direction, and a muscle function around an oral cavity can be adjusted.

Further, according to the present invention, since the inner peripheral wall is formed more angularly than the U-shape in plan view, the tongue can be restrained at a correct position, and the muscle function around the oral cavity can be further adjusted.

Further, according to the present invention, since the angular corner parts of the inner peripheral wall are formed at positions corresponding to positions between a canine and a premolar on both the right and left sides, respectively, the orthodontic appliance can be reliably fitted to the upper dentition and the lower dentition. As a result, the spreading effect and the correction effect of the permanent dentition can be further enhanced.

Further, according to the present invention, the distance between the upper inclined surfaces at the right and left lowermost parts and the distance between the lower inclined surfaces at the right and left uppermost parts, corresponding to the right and left first molars, are set to 36 mm to 41 mm. Accordingly, the permanent dentition can be arranged to be at a desired position while being spread in the lateral direction and the permanent dentition can be corrected.

Further, according to the present invention, since the base portion, the outer peripheral wall, and the inner peripheral wall are integrally formed of an elastic resin material, it is possible to enhance the wearing feeling.

Further, according to the present invention, the orthodontic appliance is attached to the upper dentition of the upper jaw and the lower dentition of the lower jaw when a deciduous dentition is being replaced with a permanent dentition. Accordingly, the dentition can be corrected while being easily spread in the lateral direction, and a muscle function around an oral cavity can be adjusted.

### BRIEF DESCRIPTION OF DRAWINGS

FIG. 1 is a perspective view showing an orthodontic appliance according to an embodiment of the present invention.
FIG. 2 is a plan view of FIG. 1.
FIG. 3 is a rear view of FIG. 1.
FIG. 4 is a front view of FIG. 1.
FIG. 5 is a bottom view showing the orthodontic appliance according to an embodiment of the present invention.
FIG. 6 is a rear view of FIG. 5.

### DETAILED DESCRIPTION

Hereinafter, embodiments of the present invention will be described. In the following embodiments, description will be provided on an example of being attached to an upper dentition of an upper jaw and a lower dentition of a lower jaw when a deciduous dentition is being replaced with a permanent dentition.

### [An embodiment of the invention]

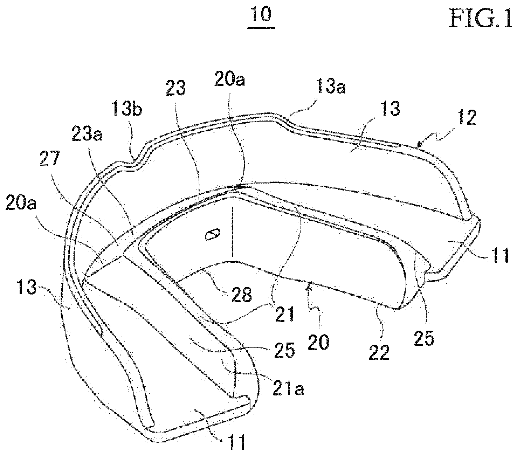

FIGs. 1 to 4 show an embodiment of the present invention.

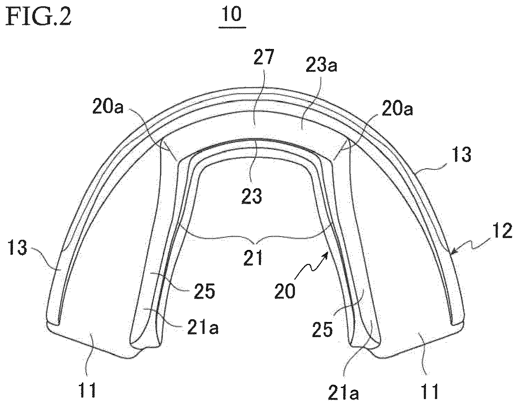

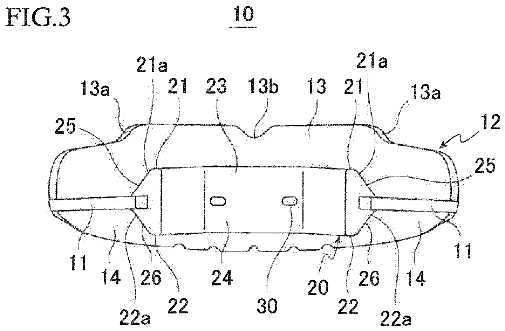

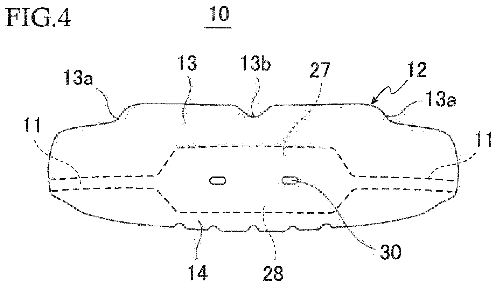

FIG. 1 is a perspective view showing an orthodontic appliance according to the embodiment of the present invention. FIG. 2 is a plan view of FIG. 1. FIG. 3 is a rear view of FIG. 1. FIG. 4 is a front view of FIG. 1.

In the following embodiment, in a state in which an orthodontic appliance 10 is inserted into the oral cavity and attached to an upper dentition and a lower dentition, a front tooth side is defined as a front side, a back tooth side is defined as a back side, and a left side and a right side with respect to the front tooth are defined as a left side and a right side, respectively. Here, the front teeth are incisors and include right and left central incisors, right and left lateral incisors, and right and left canines. The back teeth are molar teeth and include right and left first and second premolars, and right and left first to third molars.

As shown in FIGs. 1 to 4, the orthodontic appliance 10 of the present embodiment is a mouthpiece type attached to the upper dentition of the upper jaw and the lower dentition of the lower jaw. The orthodontic appliance 10 of the present embodiment is attached to the upper dentition of the upper jaw and the lower dentition of the lower jaw to move and correct the individual teeth of the upper dentition and the lower dentition in the directions to be aligned while spreading the upper dentition and the lower dentition in the lateral direction, and adjusts a muscle function around the oral cavity.

The orthodontic appliance 10 of the present embodiment is integrally formed of an elastic resin material as a whole. Specifically, the resin material is selected from, for example, silicon resin, polyolefin-based resin, styrene-based resin, acrylic resin, and the like. It is desirable that the above resin material is colorless transparent or opalescent. Accordingly, when inserted into the oral cavity, wearing on the upper dentition and the lower dentition is inconspicuous, thereby providing an excellent looking. The orthodontic appliance 10 is a molded product (aligner) molded into a shape which gradually moves the individual teeth of the upper dentition and the lower dentition in the directions to be aligned. For example, a plurality of the orthodontic appliances 10 having different sizes or different hardness are prepared in stages, and orthodontic treatment is performed by periodically replacing the orthodontic appliances 10.

The orthodontic appliance 10 mainly includes a base portion 11, an outer peripheral wall 12, and an inner peripheral wall 20. The base portion 11 is a portion sandwiched between the upper dentition of the upper jaw and the lower dentition of the lower jaw when the orthodontic appliance 10 is inserted into the oral cavity, and is formed in a U-shape in plan view between the outer peripheral wall 12 and the inner peripheral wall 20.

The outer peripheral wall 12 is arranged on the outer peripheral edge side of the base portion 11 and is formed to protrude in the up-down direction. The outer peripheral wall 12 includes an outer peripheral upper wall 13 arranged above the base portion 11, and an outer peripheral lower wall 14 arranged below the base portion 11. The outer peripheral upper wall 13 and the outer peripheral lower wall 14 are formed in a bilaterally symmetrical shape with respect to a portion corresponding to the central incisors of the front teeth.

The outer peripheral upper wall 13 is formed such that the height thereof with respect to the base portion 11 is slightly larger on the front teeth side than on the back teeth side. Therefore, in the outer peripheral upper wall 13, a pair of right and left gentle stepped portions 13a are formed at right and left symmetrical positions between the back teeth side and the front teeth side in order to avoid buccal frenulums. In the outer peripheral upper wall 13, a V-shaped notch 13b is formed at the center in the right-left direction so that the upper labial frenulum is fitted. As shown in FIG. 3, the outer peripheral lower wall 14 is formed such that the height thereof with respect to the base portion 11 gradually increases from the back teeth side to the front teeth side.

The inner peripheral wall 20 is arranged on the inner peripheral edge side of the base portion 11 and is formed to protrude in the up-down direction. The inner peripheral wall 20 protruding in the up-down direction is formed more angularly than the U-shape in plan view. The inner peripheral surface of the inner peripheral wall 20 angularly formed as described above is perpendicular to the base portion 11 and forms a space for enclosing a tongue. This space restrains the tongue in the oral cavity to adjust the muscle function.

The angular corner parts 20a are formed at positions, when the orthodontic appliance 10 is worn, corresponding to the positions between the canine and the premolar on both the right and left sides, respectively. The upper and lower angular short sides are formed at positions corresponding to the front teeth, and the upper and lower two long sides are formed at positions corresponding to the right and left back teeth, respectively.

The inner peripheral wall 20 includes right and left inner peripheral upper walls (upper walls) 21 arranged above the base portion 11 at positions corresponding to the back teeth on the right and left sides of the upper dentition, and right and left inner peripheral lower walls (lower walls) 22 arranged below the base portion 11 at positions corresponding to the back teeth on the right and left sides of the lower dentition. The inner peripheral wall 20 includes a front inner peripheral upper wall 23 arranged above the base portion 11 at a position corresponding to the front teeth of the upper dentition, and a front inner peripheral lower wall 24 arranged below the base portion 11 at a position corresponding to the front teeth of the lower dentition.

The right and left inner peripheral upper walls 21 and the right and left inner peripheral lower walls 22 include, respectively, right and left upper side surface portions (upper side surface portions) 21a and right and left lower side surface portions 22a (lower side surface portions) approaching the base portion 11. The front inner peripheral upper wall 23 and the front inner peripheral lower wall 24 have a front upper side surface portion 23a and a front lower side surface portion 24a extending to the lowermost part of the outer peripheral upper wall 13 and the uppermost part of the outer peripheral lower wall 14, respectively. The right and left inner peripheral upper walls 21 and the front inner peripheral upper wall 23 are continuously formed, and the right and left inner peripheral lower walls 22 and the front inner peripheral lower wall 24 are continuously formed.

The right and left upper side surface portions 21a include right and left upper inclined surfaces (upper inclined surfaces) 25 formed to be capable of being in contact with the back teeth of the upper dentition with a distance to the outer peripheral wall 12 becoming gradually narrower from the upper side toward the lower side. The right and left lower side surface portions 22a include right and left lower inclined surfaces (lower inclined surfaces) 26 formed to be capable of being in contact with the back teeth of the lower dentition with a distance to the outer peripheral wall 12 becoming gradually narrower from the lower side toward the upper side.

The front upper side surface portion 23a includes a front upper inclined surface 27 formed to be capable of being in contact with the front teeth of the upper dentition with a distance to the outer peripheral wall 12 becoming gradually narrower from the upper side toward the lower side. The lower side of the front upper inclined surface 27 extends to the lowermost part of the outer peripheral upper wall 13. The front lower side surface portion 24a includes a front lower inclined surface 28 formed to be capable of being in contact with the front teeth of the lower dentition with a distance to the outer peripheral wall 12 becoming gradually narrower from the lower side toward the upper side. The upper side of the front lower inclined surface 28 extends to the uppermost part of the outer peripheral lower wall 14.

The right and left upper inclined surfaces 25 and the right and left lower inclined surfaces 26 are arranged such that the distance between the lowermost parts and as well as between the uppermost parts, corresponding to the right and left first molars, is set to 36 mm to 41 mm (37.75 mm in the present embodiment). Such a distance is set to spread the dentition in the lateral direction and correct the dentition, for most Japanese people, when a deciduous dentition is being replaced with a permanent dentition.

Two vent holes 30 are formed between the front upper inclined surface 27 and the front lower inclined surface 28 in the up-down direction at a predetermined distance in the left-right direction. The vent holes 30 are used for breathing when the orthodontic appliance 10 of the present embodiment is inserted into the oral cavity of a child.

Next, the effects of the orthodontic appliance 10 of the present embodiment will be described.

The orthodontic appliance 10 of the present embodiment is applied to, for example, a child aged 6 to 9 years whose deciduous dentition is being replaced with a permanent dentition. First, the orthodontic appliance 10 is inserted into the oral cavity of the child, and is attached to the upper dentition and the lower dentition. Then, the back teeth on the right and left sides of the upper dentition and the lower dentition are brought into contact with the right and left upper inclined surfaces 25 and the right and left lower inclined surfaces 26. At the same time, the front teeth of the upper dentition and the lower dentition are brought into contact with the front upper inclined surface 27 and the front lower inclined surface 28, respectively. In this state, the mouth is closed so that the upper lip and the lower lip come into contact with each other. As a result, the muscle function can be adjusted by developing the muscle function around the oral cavity.

Further, for example, owing to that the back teeth on the right and left sides of the upper dentition and the lower dentition are brought into contact with the right and left upper inclined surfaces 25 and the right and left lower inclined surfaces 26 when a deciduous dentition is being replaced with a permanent dentition, the back teeth on the right and left sides of the upper dentition and the lower dentition are gradually spread in the lateral direction by being guided by the right and left upper inclined surfaces 25 and the right and left lower inclined surfaces 26 and crowding and the like of the back teeth on the right and left sides of the upper dentition and the lower dentition can be corrected.

At the same time, owing to that the front teeth of the upper dentition and the lower dentition are brought into contact with the front upper inclined surface 27 and the front lower inclined surface 28, the front teeth of the upper dentition and the lower dentition are gradually spread frontward by being guided by the front upper inclined surface 27 and the front lower inclined surface 28 and crowding and the like of the front teeth of the upper dentition and the lower dentition can be easily corrected.

Then, after the back teeth on the right and left sides of the upper dentition and lower dentition are brought into contact with the base portion 11 by being spread in the lateral direction, when the back teeth are intended to be spread further in the lateral direction, the orthodontic appliance 10 may be replaced with another orthodontic appliance having a larger distance between the lowermost parts as well as between the uppermost parts corresponding to the right and left first molars, or with the orthodontic appliance made of a harder material.

According to the orthodontic appliance 10 of the present embodiment, the inner peripheral wall 12 includes the right and left inner peripheral upper walls 21 and the right and left inner peripheral lower walls 22, the right and left inner peripheral upper walls 21 and the right and left inner peripheral lower walls 22 include the right and left upper side surface portions 21a and the right and left lower side surface portions 22a approaching the base portion 11, respectively, the right and left upper side surface portions 21a have the right and left upper inclined surfaces 25 capable of being in contact with the upper dentition, and the right and left lower side surface portions 22a have the right and left lower inclined surfaces 26 capable of being in contact with the lower dentition. Owing to that the upper dentition is brought into contact with the right and left upper inclined surfaces 25 and the lower dentition is brought into contact with the right and left lower inclined surfaces 26, the upper dentition and the lower dentition can be corrected while being spread in the lateral direction, and the muscle function around the oral cavity can be adjusted. For example, in the case where the orthodontic appliance 10 is worn when a deciduous dentition is being replaced with a permanent dentition, remarkable effects can be obtained.

Further, according to the present embodiment, since the inner peripheral wall 20 is formed more angularly than a U-shape in plan view, the tongue can always be restrained at a correct position, and the muscle function around the oral cavity can be further adjusted.

Further, according to the present embodiment, since the angular corner parts 20a of the inner peripheral wall 20 are formed at positions corresponding to the positions between the canine and the premolar on both the right and left sides, respectively, the orthodontic appliance 10 can be reliably fitted to the upper dentition and the lower dentition. As a result, the spreading effect and the correction effect on the permanent dentition can be further enhanced.

Further, according to the present embodiment, the distance between the right and left upper inclined surfaces 25 at the right and left lowermost parts and the distance between the right and left lower inclined surfaces 26 at the right and left uppermost parts, corresponding to the right and left first molars, are set to 36 mm to 41 mm. Accordingly, for example, when a deciduous dentition is being replaced with a permanent dentition, the permanent dentition can be arranged to be at a desired position while being spread in the lateral direction and the permanent dentition can be corrected.

Further, according to the present embodiment, since the base portion 11, the outer peripheral wall 12, and the inner peripheral wall 20 are integrally formed of an elastic resin material, it is possible to enhance the wearing feeling.

### [Another embodiment of the present invention]

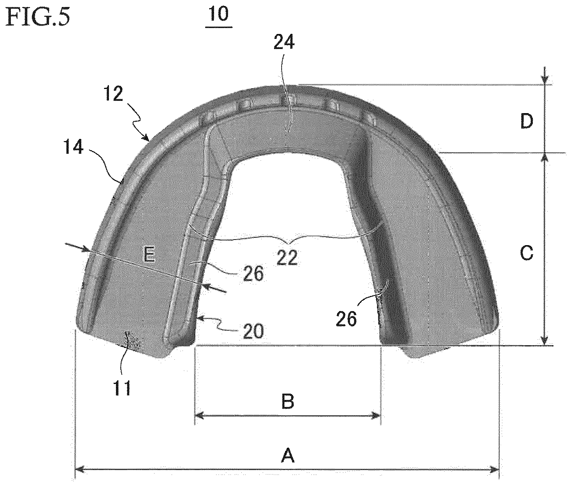

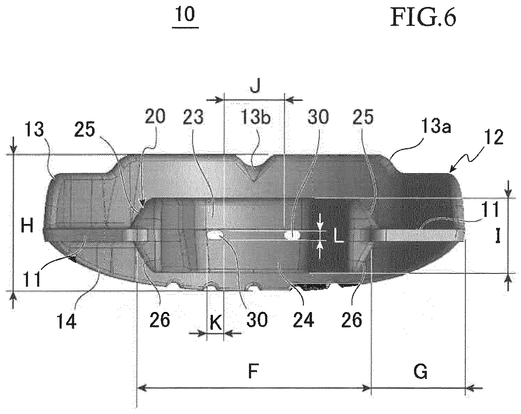

Next, specific dimensions of each part of an embodiment of the orthodontic appliance will be described with reference to FIGs. 5 and 6.

FIG. 5 is a bottom view showing an orthodontic appliance according to an embodiment of the present invention. FIG. 6 is a rear view of FIG. 5.

In the present embodiment, the dimensions of each part are as follows.

As shown in FIG. 5, the width A from one end to the other end of the outer peripheral lower wall 14 is 68.09 mm, the width B from one end to the other end of the right and left inner peripheral lower walls 22 is 29.95 mm, the distance C from the frontmost part on the inner peripheral side to the rearmost part of the right and left inner peripheral lower walls 22 is 31.06 mm, the distance D from the frontmost part on the outer peripheral side of the outer peripheral wall 12 to the frontmost part on the inner peripheral side of the inner peripheral wall 20 is 10.80 mm, and the distance E from the outer side of the outer peripheral wall 12 to the inner side of the inner peripheral wall 20 at the positions corresponding to the back teeth of the upper dentition and the lower dentition is 18.35 mm. Note that the widths A, B described above are set within a range of about ±3 mm.

As shown in FIG. 6, the width F at the uppermost parts from one end to the other end of the right and left inner peripheral lower walls 22 is 37.75 mm, the distance G from the uppermost parts of the right and left inner peripheral lower walls 22 to the outer peripheral wall 12 is 15.04 mm, the height H in the up-down direction of the orthodontic appliance 10 is 21.99 mm, the height I from the upper end of the right and left inner peripheral upper walls 21 to the lower end of the right and left inner peripheral lower walls 22 is 12.00 mm, the distance J between the two vent holes 30 is 9.79 mm, the width K of each vent hole 30 is 2.70 mm, and the height L of each vent hole 30 is 1.50 mm.

The right and left upper inclined surfaces 25 as well as the right and left lower inclined surfaces 26 are arranged such that the angle of each thereof with respect to the base portion 11 is, for example, in a range of 50 to 70 degrees, and in the present embodiment, is approximately 60 degrees. According to such setting of the angles, the effect of spreading the upper dentition and the lower dentition in the lateral direction can be further enhanced.

Owing to that the specific dimensions of the orthodontic appliance 10 of the present embodiment are set as described above, when the orthodontic appliance 10 is worn by a child aged 6 to 9 years, the dentition can be corrected while being spread in the lateral direction, and the muscle function around the oral cavity can be adjusted.

### [Other embodiments of the invention]

Note that the embodiments described above are examples of the present invention, and that the present invention is not limited only to the above embodiments.

In the above embodiments, description has been provided on the case where the orthodontic appliance 10 is worn by a child whose deciduous dentition is being replaced with a permanent dentition. However, not limited to the above, for example, even in the case where an orthodontic appliance having different dimensions is worn by an adult, it is possible to obtain the effects that the upper dentition and the lower dentition can be corrected while being spread in the lateral direction and that the muscle function around the oral cavity can be adjusted.

Further, regarding the material and shape of the orthodontic appliance 10 in the above embodiments, any material may be adopted as long as it can be inserted into the oral cavity and has the same function.

### Reference Signs List

10 Orthodontic appliance
11 Base portion
12 Outer peripheral wall
13 Outer peripheral upper wall
13a Stepped portion
13b Notch
14 Outer peripheral lower wall
20 Inner peripheral wall
20a Corner part
21 Right and left inner peripheral upper walls (Upper walls)
21a Right and left upper side surface portions (Upper side surface portions)
22 Right and left inner peripheral lower walls (Lower walls)
22a Right and left lower side surface portions (Lower side surface portions)
23 Front inner peripheral upper wall
23a Front upper side surface portion
24 Front inner peripheral lower wall
24a Front lower side surface portion
25 Right and left upper inclined surfaces (Upper inclined surfaces)
26 Right and left lower inclined surfaces (Lower inclined surfaces)
27 Front upper inclined surface
28 Front lower inclined surface
30 Vent hole

## Claims

1. An orthodontic appliance, comprising:
a base portion configured to be sandwiched between an upper dentition of an upper jaw and a lower dentition of a lower jaw and formed in a U-shape in plan view;
an outer peripheral wall arranged on an outer peripheral edge side of the base portion and protruding in an up-down direction; and
an inner peripheral wall arranged on an inner peripheral edge side of the base portion and protruding in the up-down direction,
wherein the inner peripheral wall includes an upper wall arranged above the base portion and a lower wall arranged below the base portion,
the upper wall and the lower wall include upper side surface portions and lower side surface portions approaching the base portion, respectively,
each of the upper side surface portions includes an upper inclined surface formed to be capable of being in contact with the upper dentition and having a distance with respect to the outer peripheral wall becoming narrower from an upper side toward a lower side, and
each of the lower side surface portions includes a lower inclined surface formed to be capable of being in contact with the lower dentition having a distance with respect to the outer peripheral wall becoming narrower from a lower side toward an upper side.

2. The orthodontic appliance according to claim 1,
wherein the inner peripheral wall is formed more angularly than the U-shape in plan view.

3. The orthodontic appliance according to claim 2,
wherein the angular corner parts of the inner peripheral wall are formed at positions corresponding to positions between a canine and a premolar on both the right and left sides, respectively.

4. The orthodontic appliance according to any one of claims 1 to 3,
wherein a distance between the upper inclined surfaces at the right and left lowermost parts and a distance between the lower inclined surfaces at the uppermost parts, corresponding to right and left first molars, are set to at least 36 mm.

5. The orthodontic appliance according to any one of claims 1 to 4,
wherein the base portion, the outer peripheral wall, and the inner peripheral wall are integrally formed of an elastic resin material.

6. The orthodontic appliance according to any one of claims 1 to 5,
wherein the orthodontic appliance is attached to the upper dentition of the upper jaw and the lower dentition of the lower jaw when a deciduous dentition is being replaced with a permanent dentition.
